# EUROPEAN PATENT APPLICATION

(11) **EP 3 613 559 A1**
(43) Date of publication of application: **26.02.2020**
(21) Application number: 18190114.1
(22) Date of filing: 22.08.2018
(51) Int. Cl.: B29C 64/124, B29C 64/255, B33Y 30/00

(54) **SINGLE-USE CARTRIDGE AND METHOD FOR ADDITIVE MANUFACTURING FROM PHOTOPOLYMER RESIN**

(71) Applicant: Coltène/Whaledent AG, 9450 Altstätten (CH)
(72) Inventor: Schaufelberger, Martin, 8872 Weesen (CH); Barth, Werner, 8353 Elgg (CH)
(74) Representative: Hepp Wenger Ryffel AG

(57) **Abstract**

The invention provides for a single-use cartridge (1) containing a photopolymer resin (2) for use in a method of additive manufacturing, in particular by digital light processing (DLP) or stereolithography.

## Description

The present invention relates to a single-use cartridge and a method for additive manufacturing from photopolymer resin, in particular by digital light processing (DLP) or stereolithography, such as laser-based stereolithography (SLA).

3D printing dates back to the early 1980s, when a photohardening thermoset polymer was exposed to UV light through a mask pattern to solidify certain areas (Kodama, Review of Scientific Instruments 1981). US 4,575,330 A illustrates a stereolithography process. In stereolithography a UV laser is used to photochemically solidify a light sensitive photopolymer resin. A thin film of solidified photopolymer resin is attached to a platform. A reservoir of liquid photopolymer resin remains between the platform and a transparent bottom. The platform is elevated to allow new liquid photopolymer resin to flow into the space between the platform and the bottom. The laser solidifies another layer of photopolymer resin that is attached to the previous layer on the platform. The 3D printed object is printed layer by layer, being raised out of a reservoir of fluid photopolymer resin.

Stereolithographic and DLP models have been used in medicine since the 1990s to produce 3D models of organs, bones or other regions of a body. These models were used to train surgeons before an operation. Another application for 3D printing in medicine is the production of personalized implants such as bone plates (Erickson et al. in Journal of Oral and Maxillofacial Surgery, 1999, Vol. 57(9), p. 1040-1043; doi.org/10.1016/S0278-2391 (99) 90322-1) .

3D printer are also used in dental medicine to produce implants such as crowns or bridges, temporary attachments such as splints or aligners and personalized operation tools such as trays (Tahayeri et al in Dental Materials, 2018, Vol. 34(2), p. 192-200; doi.org/10.1016/j.dental.2017.10.003)

A major challenge in 3D printing still is the mechanical quality of the printed articles. Lesions or cracks are sometimes observed. Inconsistencies within the material can lead to breaks of printed articles. In a medical application such as the implantation of a crown or a bridge into the jaw of a patient, a break of the implant can lead to trauma and additional surgery. The reason for these mechanical quality issues are not fully understood yet.

US 9,878,470 B2 discloses a container for storing a photopolymer resin, which container can also be used as the vat for printing. After usage the container with photopolymer resin is removed from the printer and an actinically opaque lid is attached to the container for storage. To allow storage of containers on top of each other, the containers have a lid with a raised portion 421a. This raised portion fits into the bottom face of the above stored container to provide an actinically opaque storage situation. While this avoids the step of pouring the remaining resin back into a storage container, the risk of quality issues cannot be overcome therewith, as will be outlined hereinbelow.

The invention seeks to mitigate one or more of the above drawbacks of the prior art, in particular to provide a cartridge for a 3D printer that enables a highest quality additive manufacturing process, in particular in the medical field.

According to the invention the problem is solved according to the independent claims.

A first aspect of the invention pertains to a single-use cartridge containing a photopolymer resin for use in a method of additive manufacturing, in particular by stereolithography or DLP.

As used herein the term "single-used cartridge" refers to any cartridge that is only to be used once, which is for the first time opened before its only use and which is not configured to be closed and stored again, but rather to be discarded.

A "photopolymer resin" as used herein refers to a polymer resin that is transferred from a liquid state into a solid state by exposure to light of a certain wavelength or range of wavelengths.

As used herein the term "additive manufacturing" refers to any process where the manufacturing of an article is based on a computer-based data model from formless or form-neutral material modified by a chemical or physical process in an iterative and/or additive manner.

Surprisingly, the quality of 3D printed articles increases when a single-use cartridge of photopolymer resin was used for stereolithography or DLP, instead of multi-use photopolymer container.

While not wishing to be bound by theory, a reason might be the guaranteed absence of partly or completely solidified photopolymer resin micro particles, since the photopolymer resin was not exposed to light before the printing process starts. It is assumed that partly or completely solidified micro particles might create material imbalances or a predetermined breaking point when they are attached to / incorporated into the object. Even though liquid photopolymer resin is typically filtrated before it is poured back into a long-time storage vat, it may well be that, even though the filtration process is laborious and time consuming, very small particles are not rejected by the filter. Unnoticed traces of particles in the liquid photopolymer resin may thus occur, resulting in poor quality of the printed article.

While the combined storage / printing container according to US 9,878,470 B2 well avoids unintentional exposure to light during filtration, it still uses the photopolymer resin multiple times, which may contribute to the occasional problems in mechanical stability of printed articles that have been observed, as outlined above.

Additionally, the use of a single-use cartridge in a stereolithographic process is beneficial since no filtration of previously used photopolymer is needed anymore, while improving the quality of the printed article.

The invention can advantageously be used with any photopolymer known in the art of 3D printing, in particular in stereolithography and DLP.

Curing of a photopolymer upon exposure to actinic radiation typically depends on the wavelength(s) of the actinic radiation and/or the amplitude of the radiation at a certain wavelength or range of wavelengths.

As used herein, an actinically opaque material substantially reduces the amplitude by at least 50%, preferably 70%, more preferably 90% of at least one wavelength of radiation passing through the material (e.g., 405 nm wavelength light), which wavelength is associated with curing of the respective photopolymer. On the other hand, as used herein an actinically transparent material reduces the amplitude by less than 50%, preferably by less than 35%, more preferably by less than 20%, and most preferably by less than 10% of that at least one wavelength of radiation passing through the material (e.g., 405 nm wavelength light), which wavelength is associated with curing of the respective photopolymer.

In preferred embodiments, he single-use cartridge has a form of a full arch, a half arch, a cube or a rectangle. Any other form sufficient to produce a 3D printed model is also possible.

The single-use cartridge preferably contains a volume of photopolymer resin of between 2 and 200 cm³, preferably between 3 and 160 cm³ and most preferably between 4 and 120 cm³.

The single-use cartridge for the manufacture of a full arch form preferably contains a volume of photopolymer resin of between 20 and 200 cm³, preferably between 30 and 160 cm³ and most preferably between 40 and 120 cm³.

The single-use cartridge for the manufacture of a half arch form preferably contains a volume of photopolymer resin of between 10 and 100 cm³, preferably between 15 and 80 cm³ and most preferably between 20 and 60 cm³.

The cubic or rectangular form single-use cartridges for the manufacture of certain other articles, in particular dental appliances as outlined herein, preferably contains a volume of photopolymer resin in the cartridge of between 2 and 20 cm³ and more preferably and more preferably between 3 and 16 cm³ and most preferably between 4 and 12 cm³.

In general, the volume and form of the cartridge preferably resembles the form of the object to be printed.

In preferred embodiments, the single-use cartridge has a bottom face comprising at least a region of actinically transparent material. The actinically transparent material is preferably covered by a sealing film that is removably attached to the bottom face of the cartridge, which film preferably is not configured to be reattached.

The actinically transparent material allows light to pass into the cartridge and solidify the photopolymer resin contained therein. The removably attached sealing film is protecting the cartridge from unwanted light exposure during storage. The sealing film is removed typically only shortly before the single-use cartridge is placed in the 3D printer. The sealing of the bottom face is configured to be removed from the region of actinically transparent material without leaving residue on the region of actinically transparent material that might deflect a ray of light of the 3D printer. This can e.g. be achieved by a fixation of the film only in at the boundaries of the bottom of the cartridge (e.g. by ultrasonic welding), and/or by an appropriately chosen pressure sensitive adhesive that exhibits much more adhesion towards the film compared to the actinically transparent region.

The single-use cartridge preferably has an opening at the top face of the cartridge. The top face of the cartridge is covered by a sealing film that is removably attached to the cartridge.

The sealing film at the top face is different from the sealing film at the bottom face. The sealing film at the top face covers the interior of the cartridge, in which the photopolymer resin is contained, and it is preferably made from a mechanically resilient material to resist some pressure when cartridges are stacked on top of each other or otherwise mechanically impaired. The sealing film of the top face is configured to be removed once and not to seal the cartridge after use. The sealing film of the top face is made from or comprises an actinically opaque material to avoid light exposure of the photopolymer resin. The film can be fixed at the boundaries of the top face of the cartridge (e.g. by ultrasonic welding), and/or by an appropriately chosen sealant.

The single-use cartridge is preferably made from an actinically opaque material, except for a part of or the whole bottom face.

A further aspect of the invention pertains to a kit-of-parts comprising a single-use cartridge as described herein, and further comprising
- a build platform (31) for solidified photopolymer resin (4), mountable to the movable platform (40) of a 3D-printer (6), wherein the outer circumference of the single-use carrier (1) essentially corresponds to the opening at the top face (13) of the at least one single-use cartridge (1); and/or
- an adapter (35) for the mounting of a build platform (31) to the movable platform (40) of a 3D-printer (6); and/or
- a positioning jig (44) to facilitate placement of the single-use cartridge (1) on the projector (41) of a 3D-printer (6).

Any of the above further elements can be included in the kit either alone or in any combination.

The positioning jig and the adapter for the mounting are configured to allow easy use of the single-use cartridges according to the invention on commonly known and well established 3D printing equipment. 3D printers are typically configured to handle much larger volumes of printing resin in a vat that is compatible with the printer, e.g. 2 liter or more. The positioning jig allows for proper and easy positioning of the cartridge according to the invention on a 3D printer.

Likewise, the build platform can also be provided for single use, to match the shape of the cartridge. The adapter may be used to fix such a single use build platform to the movable base of a 3D printer.

Yet another aspect of the invention pertains to a method of additive manufacturing from photopolymer resin, comprising the steps of:
- Providing a set of data representing an object to be printed;
- Selecting a single-use cartridge as described, based on the shape and volume of the object to be printed;
- Generating an object by additive manufacturing from the photopolymer resin contained in the single-use cartridge.

In preferred embodiments, the single-use cartridge is preferably identified with an RFID chip to either avoid mix-ups due to volume or photopolymer resin colour, and/or to allow for automatic recognition of the cartridge by the printer upon installation of the cartridge.

The object to be printed preferably is a (part of a) dental restoration, a model of a dental situation, a dental tool or a dental appliance.

The (part of a) dental restoration object preferably is a crown, a half-arch restoration, a full-arch restoration, a bridge of any size, an inlay, an overlay, a suprastructure, a denture base; without being limited to these examples.

The model of a dental situation preferably is a single tooth, a tooth stump, a half-arch dental situation or a full-arch situation; without being limited to these examples.

The dental tool could in particular be a surgical guide, a casting object, a gingiva mask or a personalized tray; without being limited to these examples.

The dental appliance preferably is a splint, an aligner; without being limited to these examples.

Yet another aspect of the invention pertains to the use of a single-use cartridge as described herein, and/or a kit-of-parts as described herein, in the manufacture of a dental restoration, a model of a dental situation, a dental tool or a dental appliance as set forth herein.

The invention is explained in more detail below on the basis of figures. These non-limiting figures show:
Figure 1: An exploded view of a single-use cartridge.
Figure 2: A vertical section of the single use cartridge.
Figure 3: A perspective view of a build platform.
Figure 4: A schematically view of a kit-of-parts.
Figure 5: A vertical section through the single-use cartridge during the process of additive manufacturing

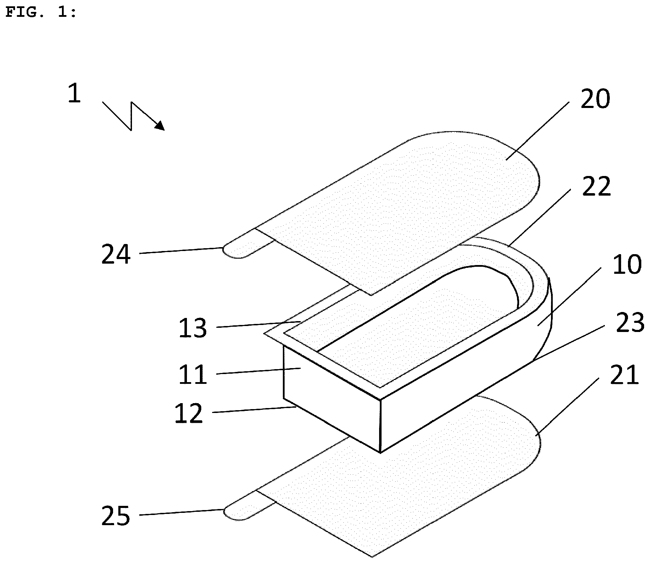

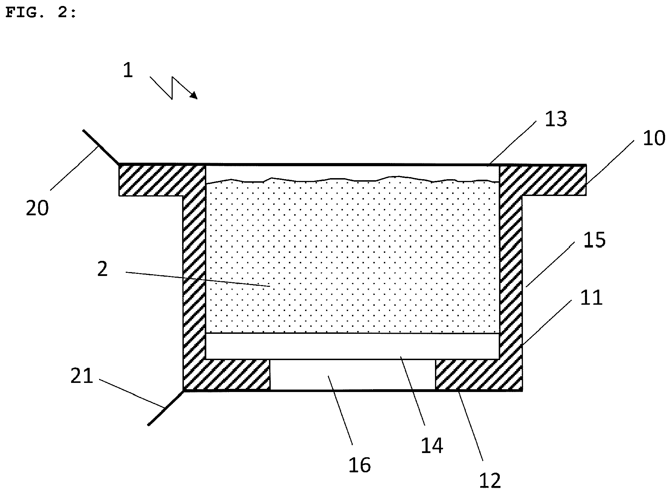

Figure 1 shows a single-use cartridge 1 according to the invention in an exploded view. The single-use cartridge comprises a vat 10 with a wall 11, a top face 13 and a bottom face 12. The wall 11 is built of an actinically opaque material to substantially avoid transmission of radiation that could cause polymerization of a photopolymer contained therein. The vat 10 is an open volume, with the bottom face 12, wherein the bottom face 12 at least partially comprises an actinically transparent material 14 (Figure 2) to allow transmission of radiation that can cause polymerization of the photopolymer contained therein. The open top face 13 of the vat 10 provides a sealing attachment surface 22 to attach a top sealing film 20. The top sealing film 20 is removable before use (it can e.g. be just torn off) and is not configured to be reattached to the single-use cartridge 1 after use. The top sealing film has a strap 24 to remove the sealing and open the vat 10. The bottom face 12 of the vat 10 has an attachment surface 23 for the bottom sealing 21. The bottom sealing 21 has a strap 25 to remove the sealing 21.

Figure 2 shows a vertical cross-section of the single-use cartridge 1. The single-use cartridge is in a storage condition. The top face 13 of the vat 10 is sealed with the top sealing 20 and the bottom face 12 is sealed with the bottom sealing 21. In the exemplary embodiment the bottom sealing 21 covers an empty volume 16 above the actinically transparent material 14. In an alternative embodiment the actinically transparent material 14 could be on the same level as the bottom face 12 (not shown). In such an embodiment, there is no empty volume 16. The sealed single-use cartridge 1 comprises a volume of liquid photopolymer resin 2.

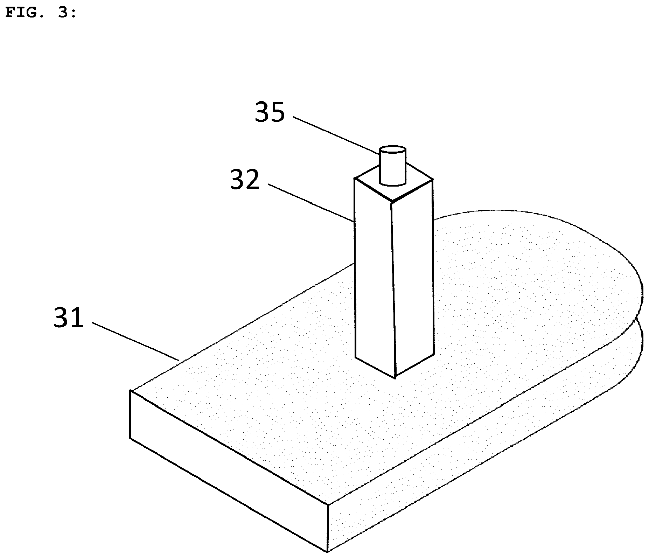

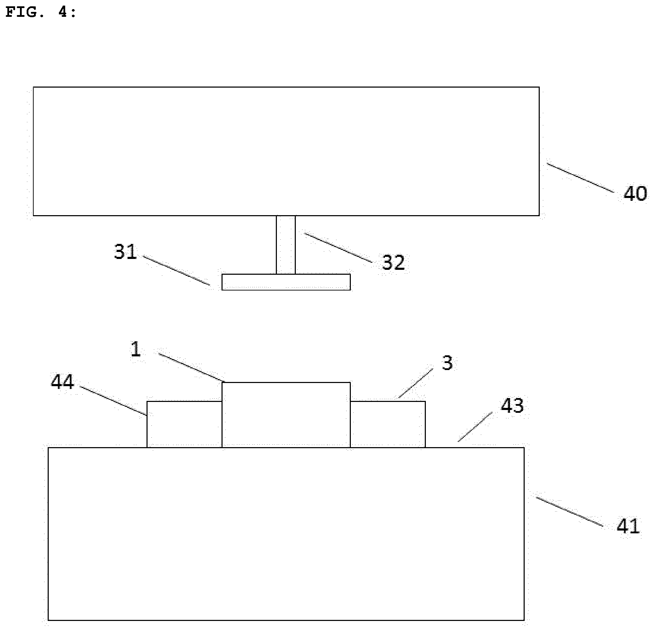

Figure 3 shows a perspective view of a build platform 31 with a lever 32. The form of the build platform 32 is adapted to the form of the single-use cartridge 1. The lever 32 of the build platform 31 has an adapter 35 to attach the build platform 31 to a movable platform 40 of a 3D printer (Figure 4).

Figure 4 shows a schematic view of elements of a kit-of parts 5. The figure shows the build platform 31 with the lever 32 attached to a movable platform 40, and further a projector 41 with a top face 43. On the top face 43 of the projector 41 a positioning jig 44 is mounted to hold the single-use cartridge 1 in place.

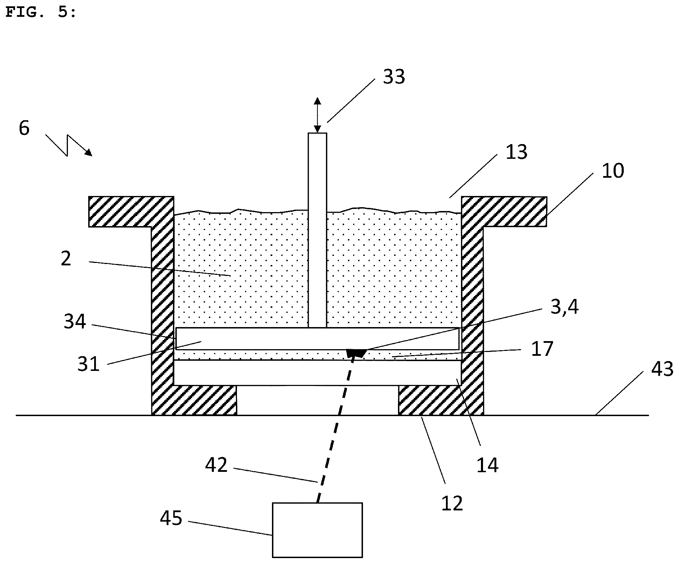

Figure 5 shows a vertical section through the single-use cartridge 1 during a process of additive manufacturing, by way of example. In a first step the top sealing 20 and the bottom sealing 21 (Figure 2) were removed from the single-used cartridge 1. Then the open vat 10 with the liquid photopolymer resin 2 was placed on the top face 43 of a projector 31 (Figure 4). The building platform 31 has then been lowered into the vat 10 creating a gap 34. Through the gap 34 the fluid photopolymer resin 2 flows on top of the build platform, while the build platform 31 moves along an axis 33 to the actinically transparent material 14 of the vat 10. When a small volume 17 of fluid photopolymer resin 2 is between the build platform 31 and the actinically transparent material 14, the process of additive manufacturing can be started. In case of SLA, a laser beam generator 45 generates a laser beam 42. The laser beam 42 passes through the actinically transparent material 14 and solidifies the fluid photopolymer resin 2. The solidified photopolymer resin 4 is attached to the build platform 31 at the contact point 3. The direction of the laser beam can be adjusted to create another part of solidified photopolymer resin in the same layer, or the build platform 31 moves upwards, away from the actinically transparent material 14 to create space between the solidified photopolymer resin 4 and the actinically transparent material 14. The process of solidification of fluid photopolymer resin 2 with a laser beam 42 is repeated until the object is finished. Likewise, in case of DLP, a digital projector generates an image in the resin layer to be solidified; the image can include layers of other objects to be printed in the same layer.

Once the object is finished the build platform 31 pulls the object out of vat 10 with the remaining fluid photopolymer resin 2. The single-use cartridge 1 is removed and discarded.

## Claims

1. Single-use cartridge (1) containing a photopolymer resin (2) for use in a method of additive manufacturing, in particular by digital light processing or stereolithography.

2. Single-use cartridge (1) according to claim 1, wherein the cartridge (1) has a form chosen from the group consisting of
a. full arch;
b. half arch;
c. cube or rectangle;

3. Single-use cartridge (1) according to claim 1, wherein the volume of photopolymer resin (2) contained in the cartridge (1) is between 2 and 200 cm³, preferably between 3 and 160 cm³ and most preferably between 4 and 120 cm³.

4. Single-use cartridge (1) according to any of claims 1 to 3, wherein a bottom face (12) comprises at least a region of actinically transparent material (14).

5. Single-use cartridge according to claim 4, wherein the actinically transparent material (14) is covered by a sealing film (21) that is removably attached to the bottom face (12) of the cartridge (1).

6. Single-use cartridge (1) according to any of claims 1 to 5, wherein an opening at the top face (13) of the cartridge (1) is covered by a sealing film (20) that is removably attached to the cartridge (1).

7. Single-use cartridge according to any of claims 1 to 6, wherein except for at least part of the bottom face (12) the wall(s) (11) of the cartridge is/are actinically opaque (15) .

8. A kit-of-parts (5), comprising a single-use cartridge (1) according to any one of claims 1 to 7; further comprising
- a build platform (31) for solidified photopolymer resin (4), mountable to the movable platform (40) of a 3D-printer (6), wherein the outer circumference of the single-use carrier (1) essentially corresponds to the opening at the top face (13) of the at least one single-use cartridge (1); and/or
- an adapter (35) for the mounting of a build platform (31) to the movable platform (40) of a 3D-printer (6); and/or
- a positioning jig (44) to facilitate placement of the single-use cartridge (1) on the projector (41) of a 3D-printer (6).

9. Method of additive manufacturing from photopolymer resin (2), comprising the steps of:
- Providing a set of data representing an object to be printed;
- Selecting a single-use cartridge (1) according to any of claims 1 to 7 based on the shape and/or outer volume of the object to be printed;
- Generate the object by additive manufacturing from the photopolymer resin (2) contained in the single-use cartridge (1).

10. Method according to claim 9, wherein the single-use cartridge (1) is identified by means of a RFID tag.

11. Method according to one of the claims 9 or 10, wherein the object to be printed is
- a dental restoration, in particular chosen from the group consisting of a crown; half-arch restoration; full-arch restoration; bridges; inlays; overlays; suprastructures; denture bases.
- a model of a dental situation, in particular chosen from the group consisting of a single tooth or tooth stump; a half-arch dental situation; a full-arch dental situation.
- a dental tool, in particular chosen form the group consisting of surgical guides; casting objects; gingiva masks; personalized impression trays.
- a dental appliance, in particular chosen form the group consisting of a splint, aligner or a denture base.

12. Use of a single-use cartridge (1) according to any of claims 1 to 7 or a kit-of-parts (5) according to claim 8 in the manufacture of a dental restoration, a model of a dental situation, a dental tool or a dental appliance.
